# EUROPÄISCHE PATENTSCHRIFT

(11) **EP 0 798 498 B1**
(45) Veröffentlichungstag und Bekanntmachung des Hinweises auf die Patenterteilung: **19.09.2001**
(21) Anmeldenummer: 96105148.9
(22) Anmeldetag: 30.03.1996
(51) Int. Cl.: F16J 15/32

(54) **Radialwellendichtring mit drehrichtungsunabhängiger Förderwirkung**
Radial lip seal with excluding effect independent of the rotation direction
Joint à lèvre radiale avec effet de refoulement indépendant du sens de rotation

(43) Veröffentlichungstag der Anmeldung: 01.10.1997
(73) Patentinhaber: Firma Carl Freudenberg, 69469 Weinheim (DE)
(72) Erfinder: Johnston, David E., East Hebron, New Hampshire, 03232 (GB)

(56) Entgegenhaltungen:
- EP-A- 0 195 682
- WO-A-87/01169
- US-A- 3 929 340

## Beschreibung

Die Erfindung betrifft einen Radialwellendichtring zur Abdichtung von Flüssigkeiten, umfassend einen Versteifungsring, in dem ein scheibenförmiges Dichtelement aus zähhartem Kunststoff festgelegt ist, das im Bereich seines Innendurchmessers trompetenartig in Richtung des abzudichtenden Raumes vorgezogen ist und in einer Kegelfläche endet, die mit der Wellenachse einen ersten Winkel einschließt, wobei die Kegelfläche eine kontinuierlich umlaufende Dichtkante begrenzt, die die Welle im Zuge eines kontinuierlich umlaufenden Dichtbandes berührt und wobei sich an die der Außenluft zugewandte Seite der Dichtkante eine Nut anschließt, auf deren Grund eine radial nach innen vorspringende, hydrodynamisch wirkende Rückfördereinrichtung für Leckflüssigkeit vorgesehen ist, die Rückfördereinrichtung durch in Umfangsrichtung verlaufende Wellen gebildet ist.

Radialwellendichtringe der vorgenannten Art gelangen zur Anwendung, um sowohl bei rotierender als auch bei stillstehender Welle eine gute Abdichtung von Flüssigkeiten zu erzielen. Sie gelangen gewöhnlich ummittelbar benachbart zu der Lagerung einer Welle zur Anwendung, beispielsweise in der Nähe eines Kugellagers. Je nach Drehrichtung der abzudichtenden Welle entstehen in diesem Bereich vollkommen verschiedene hydrodynamische Effekte, was zur Vermeidung einer Leckage Gegenmaßnahmen erfordern kann.

Ein solcher Gegenstand der eingangs beschriebenen Art ist aus der EP 0 195 682 bekannt. Dabei ist das Dichtelement so ausgeführt, dass es die Welle als ein umlaufendes Dichtband berührt und an einer zur Außenluft zugewandten Seite Einsenkungen aufweist. Bei Rotation der Welle wirken diese Einsenkungen als hydrodynamische Rückförderung für Leckageflüssigkeit.

Ein Radialwellendichtring, der eingangs ansprochenen Art auch ist aus der US-PS 3,984,113 bekannt. Das enthaltene Dichtelement besteht aus Polytetrafluorethylen. Es ist im Bereich seines Innendurchmessers mit Rippen versehen, die einerseits die Nut begrenzen und andererseits hydrodynamische Rückförderelemente bilden, die unabhängig von der Drehrichtung der abzudichtenden Welle eine gute Wirksamkeit entfalten und eine Rückförderung von Leckflüssigkeit im den abzudichtenden Raum bewirken. Die Flexibilität des Dichtelementes ist wenig befriedigend. Bei rotierender Welle auftretende Wellenbewegungen in radialer Richtung können dadurch neben Undichtigkeiten einen erhöhten Verschleiß des Dichtelementes bedingen.

Es sind auch Radialwellendichtringe bekannt, bei denen das Dichtelement aus elastomerem Werkstoff besteht. Die Dichtlippe vermag bei solchen Ausführungen radialen Ausweichbewegungen der abzudichtenden Welle wesentlich besser zu folgen als die vorstehend beschriebene Ausführung. Die Abriebbeständigkeit ist jedoch wesentlich geringer und maßgeblich von der Größe der jeweiligen Anpressung abhängig. Üblicherweise ist die Dichtlippe bei Radialwellendichtringen dieser Art mit einer Ringwendelfeder aus metallischem Werkstoff belastet. Sie ist dadurch über lange Zeiträume nahezu unverändert hoch, was bei ungünstiger Abstimmung dazu führen kann, dass die Dichtlippe vorzeitig zerstört wird.

Der Erfindung liegt die Aufgabe zugrunde, einen Radialwellendichtring der eingangs genannten Art derart weiterzuentwickeln, dass sich bei Gewährleistung einer guten Abriebbeständigkeit ein verbessertes Abdichtungsergebnis unabhängig von der Drehrichtung der abzudichtenden Welle auch beim Auftreten radialer Schwingungen der Welle ergibt.

Diese Aufgabe wird erfindungsgemäß bei einem Radialwellendichtring der eingangs genannten Art durch die kennzeichnenden Merkmale von Anspruch 1 gelöst. Auf vorteilhafte Ausgestaltungen nehmen die Unteransprüche Bezug.

Bei dem erfindungsgemäßen Radialwellendichtring ist es vorgesehen, dass die in Umfangsrichtung verlaufenden Wellen gebildet ein in Richtung des abzudichtenden Raumes keilförmig verjüngtes Innenprofil haben, wobei das Profil mit der Wellenachse einen zweiten Winkel einschließt, der kleiner ist als der erste Winkel.

Hierbei gilt, dass der erste Winkel durch die Kegelfläche am trompetenartig, in Richtung des abzudichtenden Raumes vorgezogene Kegelfläche und der Wellenachse eingeschlossen wird. Der zweite Winkel wird durch die Fläche des Innenprofils und der Wellenachse eingeschlossen.

Parallel zur Wellenachse betrachtet, haben die Wellen eine Länge, die mit derjenigen der Nut übereinstimmt. Sie haben dadurch bei rotierender Welle eine hydrodynamische Wirksamkeit, die diejenige der bekannten Elemente bei weitem übertrifft. Auch beim Auftreten betriebsbedingter, radialer Auslenkbewegungen der abzudichtenden Welle wird dadurch eine ausgezeichnete Rückförderung von Leckflüssigkeit zurück in den abgedichteten Raum bewirkt. Im Hinblick auf die Vermeidung einer unerwünschten Leckage ist das von großem Vorteil.

Wenn die Nut durch eine Eintiefung des scheibenförmigen Dichtelementes gebildet ist, resultiert in ihrem Bereich eine gewisse Schwächung des tragenden Querschnittes. Dieser Nachteil kann in Kauf genommen werden insofern, als sich die Flexibilität des Dichtelementes wesentlich vergrößert. Eine Verbesserung des Abdichtungsergebnisses beim Auftreten radial gerichteter Wellenschwingungen ist davon die Folge.

Als zweckmäßig hat es sich erwiesen, wenn die Nut an dem von der Dichtkante abgewandten Ende durch eine kreisringförmige Fläche begrenzt ist, die der Wellenachse im wesentlichen senkrecht zugeordnet ist. Die Verwirbelungseffekte, die im Bereich der wellenförmigen Vorsprünge bei rotierender Welle entstehen, werden dadurch auch auf den unmittelbaren Bereich der dynamischen Abdichtungszone konzentriert. Hierdurch ist es völlig ausgeschlossen, dass sich in dieser kritischen Abdichtungszone Ablagerungen festsetzen können, die einerseits zu einer Beeinträchtigung der Flexibilität der Dichtlippe führen und andererseits die geometrischen Verhältnisse des Dichtspaltes verändern und Undichtigkeiten aufgrund hydrodynamischer Effekte bedingen könnten.

Die bei rotierender Welle durch die Wellung verursachten, in Umfangsrichtung wirksamen Verwirbelungseffekte lassen sich in vorteilhafter Weise durch axial gerichtete Verwirbelungseffekte überlagern, wenn der zweite Winkel, in Umfangsrichtung betrachtet, bis zum Scheitel einer jeden Wellung zunächst zu und danach wieder abnimmt. Zusätzlich wird durch eine solche Ausbildung der Druckausgleich in Umfangsrichtung verbessert, was dazu beiträgt, ein Abheben der Dichtkante von der Oberfläche der zu abzudichtenden Welle als Folge der sich bei deren Rotationsbewegung ergebenden, hydrodynamischen Kräfte zu verhindern.

Um das Dichtelement im Bereich der Nut nicht unnötig zu schwächen, hat es sich als vorteilhaft bewährt, wenn der Grund der Nut ein Profil hat, das mit der Wellenachse einen dritten Winkel einschließt, wobei der dritte Winkel und der zweite Winkel identisch sind. Innerhalb der Nut ergibt sich folglich, in Umfangsrichtung betrachtet, an keiner Stelle der Nut eine veränderte Zuordnung zwischen deren Nutgrund und der Wellenachse. Die Herstellung ist dementsprechend stark vereinfacht.

Um die Flexibilität des Dichtelementes noch weiter zu verbessern, hat es sich als vorteilhaft bewährt, wenn es in dem sich an die Nut anschließenden Bereich mit zumindest einer die Welle konzentrisch umschließenden Rille versehen ist. Zweckmäßigerweise hat die oder jede Rille ein V-förmig nach außen geöffnetes Profil, wobei der Querschnitt demjenigen eines gleichseitigen Dreiecks entsprechen kann. Entsprechende Rillen lassen sich sehr leicht erzeugen. Sind mehrere entsprechende Rillen vorhanden, dann sollte der gegenseitige Abstand nicht größer sein als die zweifache Breite an der Mündung. Hierdurch wird erreicht, dass sich das zunächst in scheibenförmiger Gestalt vorliegende Dichtelement im Bereich seines Innendurchmessers unter Vermeidung einer spezifischen Werkstoffüberbeanspruchung besonders gleichmäßig trompetenartig in Richtung des später abzudichtenden Raumes verformen lässt, was die Erzielung einer guten Dauerhaltbarkeit wesentlich begünstigt. Die einzelnen Rillen können dabei in gleichmäßigen Abständen voneinander vorgesehen sein.

Das Dichtelement kann auf der dem abzudichtenden Raum zugewandten Seite in zumindest einem Teilbereich mit einer Beschichtung aus einem elastomeren Werkstoff unlösbar verbunden sein. Die Menge des bei seiner Herstellung benötigten, zähharten Kunststoffes kann dementsprechend reduziert sein, was nicht nur unter Kostengesichtspunkten von Vorteil ist, sondern darüber hinaus eine verbesserte Flexibilität und damit Abdichtwirkung bedingt bei unverändert hoher Abriebbeständigkeit. Die Beschichtung kann dabei in einer kontinuierlich umlaufenden Dichtlippe enden, die das Dichtelement auf seiner ganzen Länge übergreift und die Welle anliegend berührt. Die Dichtlippe wird bei einer solchen Ausführung durch das Dichtband des Dichtelementes in radialer Richtung geführt, was einer Beschädigung durch die rotierende Welle entgegenwirkt und es gestattet, die zur Erzielung eines guten Abdichtungsergebnisses benötigten Anpresskräfte auf das absolute Minimum zu senken. Die Verwendung einer Ringwendelfeder zur Anpressung der Dichtlippe an die Welle ist dadurch im allgemeinen entbehrlich. Die Dichtlippe kann in axialer Richtung durch zwei einander durchschneidende Kegelflächen begrenzt sein, wobei die dem abzudichtenden Raum zugewandte Kegelfläche mit der Dichtungsachse einen größeren Winkel anschließt als die davon abgewandte Kegelfläche. Der zur Anwendung gelangende elastomere Werkstoff kann irgendeiner der einschlägig verwendeten Gummimischungen entsprechen. Er kann nach oder während seiner Formgebung und Verfestigung mit dem Dichtelement verbunden sein.

Das Dichtelement besteht vorzugsweise aus PTFE. Es kann bei einer solchen Ausführung durch einen Prägeprozess in die erforderliche Gestalt überführt werden. Die Verwendung eines thermoplastischen elastomeren Werkstoffes zur Herstellung des Dichtelementes ist jedoch ebenfalls möglich und bietet unter Kostengesichtspunkten erhebliche Vorteile.

Als zweckmäßig hat es sich erwiesen, wenn die Wellung, in Umfangsrichtung betrachtet, sinusförmig ausgebildet ist. Sie kann dabei, in Umfangsrichtung betrachtet, symmetrisch verlaufend ausgebildet sein. Der Gegenstand der Erfindung wird nachfolgend anhand der Zeichnung weiter verdeutlicht. Es zeigen
- Figur 1:: einen eingebauten Radialwellendichtring während der bestimmungsgemäßen Verwendung in einer Ansicht von hinten;
- Figur 2:: den Radialwellendichtring gemäß Figur 1 in quergeschnittener Darstellung, bezogen auf die Schnittebene 2-2;
- Figur 3:: einen perspektivischen Ausschnitt aus einem Radialwellendichtring gemäß Figur 1 in uneingebautem Zustand;
- Figur 4:: den in Figur 2 durch den Kreis 4 angedeuteten Abschnitt des Radialwellendichtringes in vergrößerter Wiedergabe;
- Figur 5:: eine alternative Ausführungsform des durch den Kreis 4 in Figur 2 bezeichneten Abschnittes des Radialwellendichtringes;
- Figur 6:: einen perspektivischen Ausschnitt aus einem Radialwellendichtring der abweichend von der Ausführung nach Figur 1 gestaltet ist;
- Figur 7:: einen quergeschnittenen Ausschnitt aus einem Radialwellendichtring gemäß Figur 6;
- Figur 8:: den quergeschnittenen Ausschnitt aus einem Radialwellendichtring gemäß Figur 6 und 7 im eingebauten Zustand;
- Figur 9:: einen entlang der Linie 9-9 gemäß Figur 4 quergeschnitten wiedergegebenen Radialwellendichtring im eingebauten Zustand;
- Figur 10:: einen entlang der Linie 10-10 gemäß Figur 5 quergeschnitten wiedergegebenen Radialwellendichtring im eingebauten Zustand.

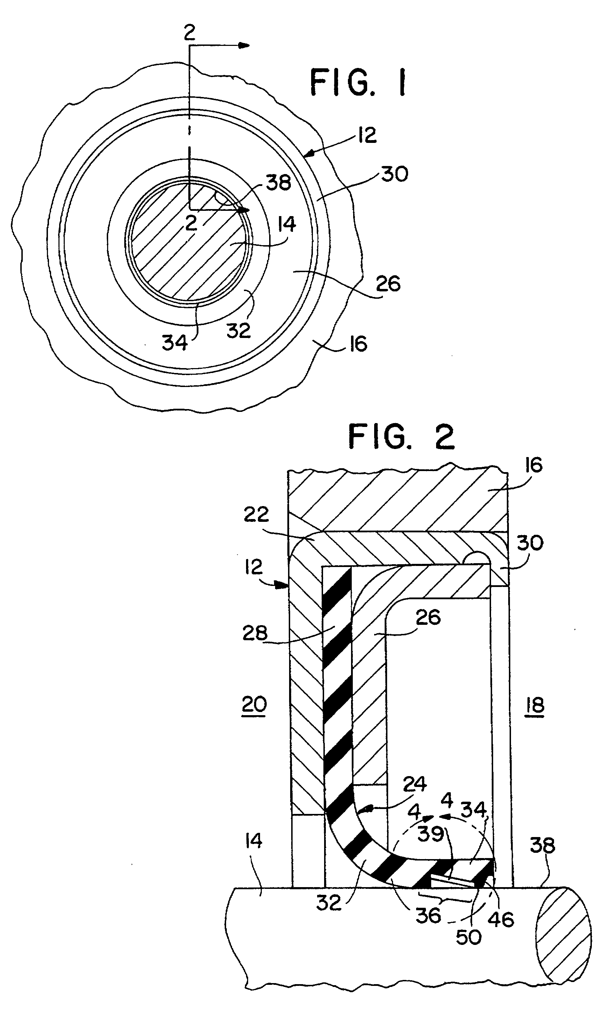

Die Figuren 1 und 2 zeigen einen Radialwellendichtring 12, der für die Abdichtung einer verdrehbaren Welle 14 bestimmt ist, die durch eine Öffnung in der Wandung eines stationären Gehäuses 16 durchgeführt ist. Die Welle 14 ist innerhalb des Gehäuses 16 durch einen Satz von Lagern (nicht gezeigt) abgestützt. Der Radialwellendichtring 12 hat den Zweck, eine in dem Gehäuse enthaltene Schmierflüssigkeit, beispielsweise ein Schmieröl, abzudichten. Der Radialwellendichtring ist folglich dem das Schmieröl enthaltenden, abzudichtenden Raum 18 mit der einen Seite zugeordnet und der Außenluft mit der anderen Seite. Der Radialwellendichtring 12 umfasst, wie in Figur 2 zu erkennen, einen Versteifungsring 22, der flüssigkeitsdicht und unverrückbar mit dem Gehäuse verbunden ist. Das Dichtelement 24 ist aus einem zähharten Material erzeugt, beispielsweise aus Polyfluorethylen oder irgendeinem anderen thermoplastischen oder polymeren Werkstoff. Es ist mit dem Versteifungsring 20 durch einen Stützring 26 verklammert, der den Halterabschnitt 28 das Dichtelement 24 beiderseits umschließt und unverrückbar festlegt. Ein radial nach innen weisender Flanschvorsprung 30 des Versteifungsringes 22 gewährleistet, dass sich keine Veränderung hinsichtlich der gegenseitigen Zuordnung des Dichtelementes 24 zu dem Verstärkungsring 22 ergibt.

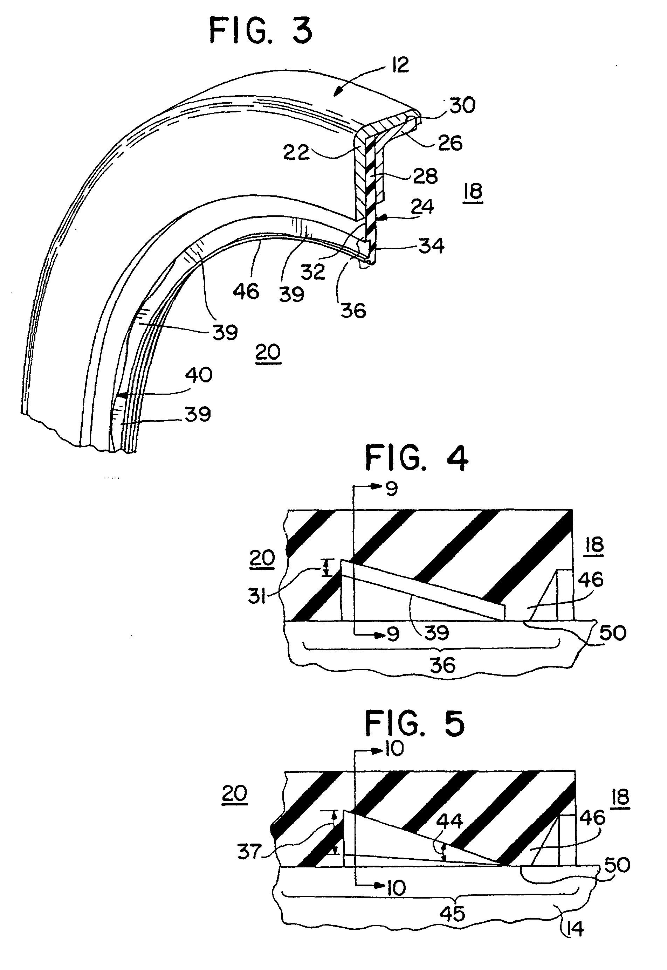

Das Dichtelement 24 ist, wie in Figur 3 zu erkennen, im uneingebauten Zustand des Radialwellendichtringes von kreisringförmiger Gestalt und der abzudichtenden Welle (nicht gezeigt) im wesentlichen senkrecht zugeordnet. Es wird, wie in Figur 2 zu erkennen, beim Einbau des Radialwellendichtringes im Bereich seines Innendurchmessers trompetenartig in Richtung des abzudichtenden Raumes vorgezogen, beispielsweise durch das Einfügen der abzudichtenden Welle 14, wobei sich eine elastische Verformung des Verformungsabschnittes 32 des Dichtelementes 24 ergibt. Die elastische Verformung bewirkt, dass die Dichtlippe 34 mit der dynamischen Abdichtungszone 36 in eine räumliche Position überführt wird, in der sie die äußere Begrenzungsfläche 38 der abzudichtenden Welle 14 anliegend berührt. Bedingt durch die zähharten Eigenschaften und die sich dabei ergebende, elastische Verformung des das Dichtelement 24 bildenden Werkstoffkörpers ergibt sich dabei eine elastische Deformierung des radial nach innen weisenden Abschnittes des Dichtelementes 24, wodurch die Dichtlippe 34 die äußere Umfangsfläche der abzudichtenden Welle 14 und einen elastischen Vorspannung berührt.

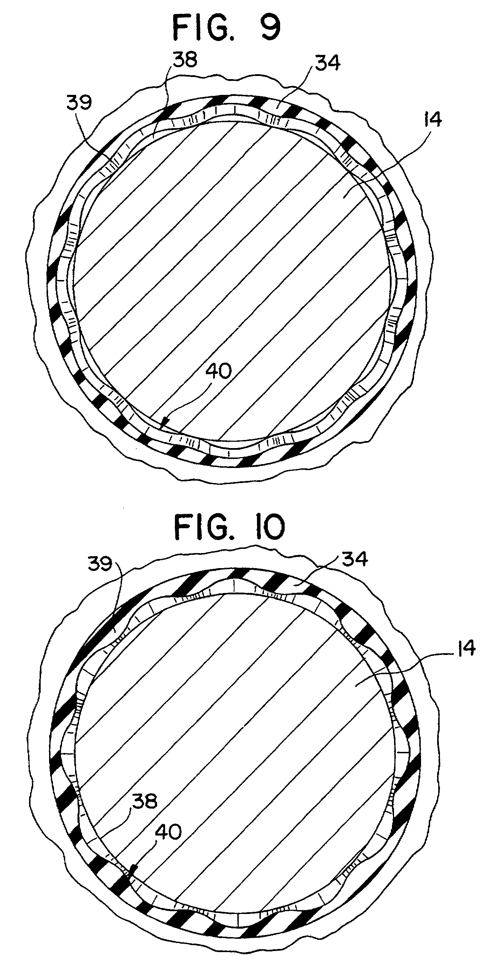

Wie in den Figuren 4 und 9 zu erkennen, beinhaltet die dynamisch aktive Dichtzone 36 des Dichtelementes 24 eine Nut, auf deren Grund eine radial nach innen vorspringende, hydrodynamisch wirkende Rückfördereinrichtung für die abzudichtende Flüssigkeit vorgesehen ist, wobei die Rückfördereinrichtung durch eine in Umfangsrichtung verlaufende Wellung 39 gebildet ist, die ein in Richtung des abzudichtenden Raumes 18 keilförmig verjüngtes Innenprofil hat und wobei das Profil der Wellung mit der Wellenachse einen zweiten Winkel einschließt. Dieser zweite Winkel ist kleiner als ein erster Winkel, welcher durch die Kegelfläche am trompetenartigen Ende des Dichtelements mit der Wellenachse eingeschlossen wird. Der zweite Winkel ist in Figur 5 der das Bezugszeichen 44 gekennzeichnet. Die Kegelfläche am Ende des Dichtelements 24 ist in der Detaildarstellung der Figur 4 und der Figur 5 gut erkennbar. Die Wellung ist sinusförmig gestaltet und umschließt die dynamische Abdichtungszone auf dem gesamten Umfang. Sie bewirkt bei rotierender Welle eine dynamische Abdichtwirkung, die darin besteht, dass den Radialwellendichtring passierende Leckflüssigkeit in den abgedichteten Raum (18) zurückgefördert wird. Die radiale Tiefe der Wellung (39) beträgt 0,05 bis 1,0 mm in Abhängigkeit von der Art der abzudichtenden Flüssigkeit. Die Wellung (39) ist im wesentlichen gleichmäßig ausgebildet, dergestalt, dass die in Umfangsrichtung aufeinanderfolgenden Wellen im wesentlichen gleichmäßig ansteigen und wieder abfallen. Eine besonders gut geeignete Wellung dieses Typs wird in der US-PS 5,190,299 beschrieben und gezeigt. Diese ist besonders gut für die Zwecke der vorliegenden Erfindung geeignet.

Die Figuren 5 und 10 zeigen eine erste Alternativausführung des erfindungsgemäßen Radialwellendichtringes, in der der zweite Winkel, den die Wellung mit der Dichtungsachse einschließt, in Umfangsrichtung betrachtet, bis zum Scheitel einer jeden Welle zunächst zu und danach wieder abnimmt. Eine solche Ausbildung der Wellung bedingt eine gegenseitige Überlagerung von umfangs- und axialgerichteten Turbulenzen innerhalb des Dichtspaltes, die die Erzielung einer guten Abdichtwirkung in besonderer Weise begünstigen. Der Winkel 44 der Wellung ist normalerweise in Richtung der Außenluft geöffnet und umfasst 2 bis 20 Grad, bezogen auf die Wellenachse. Die durchschnittliche Höhe 37 der Wellung 39 ist abhängig von dem Winkel 44, den die Wellung an der jeweiligen Umfangsstelle mit der Dichtungsachse einschließt.

Das kontinuierlich umlaufende Dichtband 46 berührt den Außenumfang der abzudichtenden Welle 14 während der bestimmungsgemäßen Verwendung auf dem gesamten Umfang. Das Dichtband 46 bildet eine statische Abdichtungszone, die das Dichtelement 24 während der bestimmungsgemäßen Verwendung in Richtung des abzudichtenden Raumes begrenzt. Es wird durch die vorausgegangene, elastische Deformierung des Dichtelementes unter einer elastischen Vorspannung an den Außenumfang der abzudichtenden Welle angepresst und ist in erster Linie wirksam, wenn sich die abzudichtende Welle im Ruhezustand befindet und keine Rotationsbewegung ausführt. Beim Einsetzen der Drehbewegung entstehen im Bereich der Wellung hydrodynamisch wirkende Kräfte, die ein Abheben des Dichtbandes 46 von der Oberfläche der abzudichtenden Welle bewirken, mit der Folge, dass abzudichtende Flüssigkeit aus dem abzudichtenden Raum 18 unter dem Dichtband 46 hindurchzutreten vermag. Sie vermag indessen die dynamische Abdichtungszone nicht in ihrer Gesamtheit zu überwinden, sondern sie wird durch die in diesem Bereich wirksamen Pumpkräfte unter dem Dichtband 46 hindurch und zurück in den abgedichteten Raum gefördert.

In Figur 9 wird gezeigt, dass die Wellung 39 in Umfangsrichtung betrachtet, symmetrisch ausgebildet ist, mit der Folge, dass Leckflüssigkeit unabhängig von der Richtung der Drehbewegung der abzudichtenden Welle 14, in den abzudichtenden Raum 18 zurückgefördert wird.

Eine solcher Radialwellendichtring ist besonders geeignet für die Abdichtung von Wellen, die während der bestimmungsgemäßen Verwendung eine abwechselnde Drehrichtung aufweisen können.

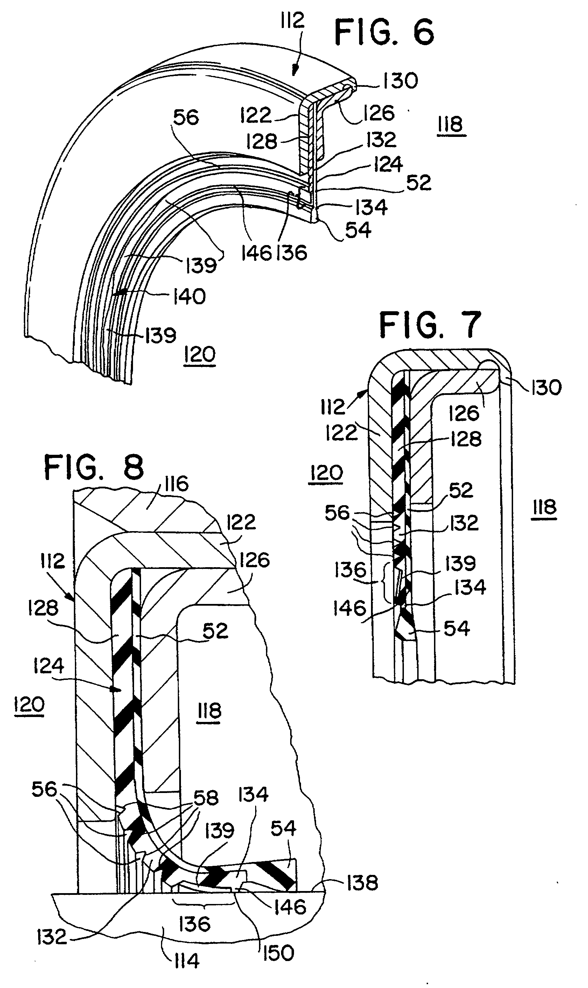

In den Figuren 6 bis 8 wird ein Radialwellendichtring gezeigt, bei dem die Bezugsziffern der einzelnen Teile in bezug auf die vorstehend beschriebene Ausführung um jeweils 100 erhöht sind. Der Radialwellendichtring 112 umfasst dabei einen Versteifungsring 122 und einen Klemmring 126, die das Dichtelement 124 im Bereich seines Halterabschnittes 128 sandwichartig umklammern. Das Dichtelement 124 ist auf der während der bestimmungsgemäßen Verwendung dem abzudichtenden Raum 118 zugewandten Seite vollständig überdeckt durch eine Beschichtung 52 aus elastomerem Werkstoff, die unlösbar mit dem Dichtelement verbunden ist, beispielsweise durch gegenseitige Verklebung oder durch unmittelbare Anvulkanisierung. Die elastomere Beschichtung 52 endet in einer kontinuierlich umlaufenden Dichtlippe 54, die während der bestimmungsgemäßen Verwendung die Oberfläche 138 der abzudichtenden Welle mit einem weiteren, durchgehenden Dichtband berührt. Die sich während der bestimmungsgemäßen Verwendung ergebende Dichtwirkung in bezug auf die Abdichtung von viskosen Flüssigkeiten wird dadurch verbessert.

Das Dichtelement 124 weist auf der der Außenluft 120 zugewandte Seite, in dem sich an die dynamische Abdichtungszone 136 anschließenden Bereich eine Anzahl Rillen 56 auf, die die Dichtungsachse während der bestimmungsgemäßen Verwendung konzentrisch umschließen und die gleichmäßige Abstände voneinander haben sowie das Profil eines gleichseitigen Dreiecks. Der gegenseitige Abstand der Rillen 56 ist etwa 1,5 mal so groß wie die radiale Breite der Rillen 56 im Bereich der Mündung, bezogen auf den uneingebauten und unverformten Zustand. Die Rillen 56 bewirken eine Verminderung der radialen Kräfte, die während der bestimmungsgemäßen Verwendung von der dynamischen Abdichtungszone 138 des Dichtelementes 124 auf die Oberfläche der abzudichtenden 114 ausgeübt werden. Darüber hinaus bewirkt das Vorhandensein der Rille 56 eine Verbesserung der Flexibilität des Verformungsabschnittes 132 mit der Folge, dass die dynamische Abdichtungszone 136 während der bestimmungsgemäßen Verwendung radialen Ausweichbewegungen der abzudichtenden Welle 114 in besserer Weise zu folgen vermag.

Das Vorhandensein der Rillen 56 bewirkt eine Schwächung des tragenden Querschnittes des Dichtelementes 24 mit der Gefahr, dass dieses unter ungünstigen Bedingungen in der gedachten Verlängerung der Scheitelpunkte von zumindest einer Rille 56 brechen könnte. Auch eine solche Beschädigung führt indessen nicht zum Ausfall des Radialwellendichtringes insofern, als ein Bruch die elastische Beschichtung 52 nicht zu passieren vermag und insofern weder die grundsätzliche Funktionsfähigkeit des Radialwellendichtringes beeinträchtigt noch zur Entstehung einer Leckage führen kann. Die in den Figuren 6 bis 8 gezeigte Ausführung des Radialwellendichtringes zeichnet sich hierdurch durch eine besonders gute Funktionssicherheit aus.

## Patentansprüche

1. Radialwellendichtring zur Abdichtung von Flüssigkeiten, umfassend einen Versteifungsring (22), in dem ein scheibenförmiges Dichtelement (24) aus zähhartem Kunststoff festgelegt ist, das im Bereich seines Innendurchmessers trompetenartig in Richtung des abzudichtenden Raumes (18) vorgezogen ist und in einer Kegelfläche endet, die mit der Wellenachse einen ersten Winkel einschließt, wobei die Kegelfläche eine kontinuierlich umlaufende Dichtkante (50) begrenzt, die die Welle (14) im Zuge eines kontinuierlich umlaufenden Dichtbandes (46) berührt und wobei sich an die der Außenluft (20) zugewandte Seite der Dichtkante (50) eine Nut anschließt, auf deren Grund eine radial nach innen vorspringende, hydrodynamisch wirkende Rückfördereinrichtung für Leckflüssigkeit vorgesehen ist, die Rückfördereinrichtung durch in Umfangsrichtung verlaufende Wellen (39) gebildet ist, **dadurch gekennzeichnet, dass** die in Umfangsrichtung verlaufenden Wellen (39) ein in Richtung des abzudichtenden Raumes (18) keilförmig verjüngtes Innenprofil haben, und dass das Profil mit der Wellenachse einen zweiten Winkel einschließt, der kleiner ist als der erste Winkel.

2. Radialwellendichtring nach Anspruch 1, **dadurch gekennzeichnet, dass** die Nut durch eine Eintiefung des scheibenförmigen Dichtelementes gebildet ist.

3. Radialwellendichtring nach einem der Ansprüche 1 bis 2, **dadurch gekennzeichnet, dass** die Nut an dem von der Dichtkante (50) abgewandten Ende durch eine kreisringförmige Fläche begrenzt ist, die der Wellenachse während der bestimmungsgemäßen Verwendung im wesentlichen senkrecht zugeordnet ist.

4. Radialwellendichtring nach einem der Ansprüche 1 bis 3, **dadurch gekennzeichnet, dass** der zweite Winkel, in Umfangsrichtung betrachtet, bis zum Scheitel einer jeden Welle zunächst zu- und danach wieder abnimmt.

5. Radialwellendichtring nach einem der Ansprüche 1 bis 4, **dadurch gekennzeichnet, dass** der Grund der Nut ein Profil hat, das mit der Wellenachse einen dritten Winkel einschließt und dass der dritte Winkel und der zweite Winkel identisch sind.

6. Radialwellendichtring nach einem der Ansprüche 1 bis 5, **dadurch gekennzeichnet, dass** das Dichtelement (24) in dem sich an die Nut anschließenden Bereich mit zumindest einer die Welle (14) konzentrisch umschließenden Rille (56) versehen ist.

7. Radialwellendichtring nach Anspruch 6, **dadurch gekennzeichnet, dass** die oder jede Rille (56) ein V-förmiges Profil hat.

8. Radialwellendichtring nach einem der Ansprüche 6 bis 7, **dadurch gekennzeichnet, dass** mehrere Rillen (56) in gleichmäßigen Abständen voneinander vorgesehen sind.

9. Radialwellendichtring nach einem der Ansprüche- 1 bis 8, **dadurch gekennzeichnet, dass** das Dichtelement (24) auf der dem abzudichtenden Raum (18) zugewandten Seite in zumindest einem Teilbereich mit einer Beschichtung (52) aus einem elastomeren Werkstoff unlösbar verbunden ist.

10. Radialwellendichtring nach einem der Ansprüche 1 bis 9, **dadurch gekennzeichnet, dass** die Beschichtung (52) in einer kontinuierlich umlaufenden Dichtlippe (54) endet, die die Welle (14) berührt.

11. Radialwellendichtring nach einem der Ansprüche, 1 bis 10, **dadurch gekennzeichnet, dass** die Dichtlippe (54, 154) in axialer Richtung durch zwei einander durchschneidende Kegelflächen begrenzt ist.

12. Radialwellendichtring nach einem der Ansprüche 1 bis 11, **dadurch gekennzeichnet, dass** das Dichtelement (24) aus PTFE besteht.

13. Radialwellendichtring nach einem der Ansprüche 1 bis 12, **dadurch gekennzeichnet, dass** das Dichtelement (24) aus einem thermoplastischen Elastomerwerkstoff besteht.

14. Radialwellendichtring nach einem der Ansprüche 1 bis 13, **dadurch gekennzeichnet, dass** die Wellen (39) sinusförmig ausgebildet sind.

15. Radialwellendichtring nach einem der Ansprüche 1 bis 14, **dadurch gekennzeichnet, dass** die Wellen (39), in Umfangsrichtung betrachtet, symmetrisch ausgebildet sind.

## Claims

1. A radial shaft-sealing ring for the sealing-off of liquids, comprising a reinforcing ring (22), in which is secured a disc-shaped sealing element (24) made of high-viscosity plastic, which, in the region of its inside diameter, is drawn forwards in a trumpetlike manner in the direction of the space (18) to be sealed off and which terminates in a conical surface forming a first angle with the shaft axis, the conical surface delimiting a continuously peripheral sealing edge (50) which is in contact with the shaft (14) along a continuously peripheral sealing strip (46), and that side of the sealing edge (50) which faces the outside air (20) being adjacent to a groove, on the bottom of which is provided a radially inward-projecting, hydrodynamically acting return device for leakage liquid, the return device being formed by corrugations (39) running in the circumferential direction, **characterized in that** the corrugations (39) running in the circumferential direction have an inner profile tapered in a wedge-shaped manner in the direction of the space (18) to be sealed off, and in that the profile forms with the shaft axis a second angle which is smaller than the first angle.

2. A radial shaft-sealing ring according to Claim 1, **characterized in that** the groove is formed by an indentation of the disc-shaped sealing element.

3. A radial shaft-sealing ring according to either one of Claims 1 and 2, **characterized in that** the groove is delimited, at the end facing away from the sealing edge (50), by an annular surface which is arranged essentially perpendicularly to the shaft axis during the intended use.

4. A radial shaft-sealing ring according to any one of Claims 1 to 3, **characterized in that**, as seen in the circumferential direction, the second angle first increases as far as the apex of each corrugation and then decreases again.

5. A radial shaft-sealing ring according to any one of Claims 1 to 4, **characterized in that** the bottom of the groove has a profile which forms a third angle with the shaft axis, and in that the third angle and the second angle are identical.

6. A radial shaft-sealing ring according to any one of Claims 1 to 5, **characterized in that** the sealing element (24) is provided, in the region adjacent to the groove, with at least one flute (56) concentrically surrounding the shaft (14).

7. A radial shaft-sealing ring according to Claim 6, **characterized in that** the or each flute (56) has a V-shaped profile.

8. A radial shaft-sealing ring according to either one of Claims 6 and 7, **characterized in that** a plurality of flutes (56) are provided at uniform distances from one another.

9. A radial shaft-sealing ring according to any one of Claims 1 to 8, **characterized in that** the sealing element (24), on the side facing the space (18) to be sealed off, is unreleasably connected, in at least one part-region, to a coating (52) consisting of an elastomeric material.

10. A radial shaft-sealing ring according to any one of Claims 1 to 9, **characterized in that** the coating (52) terminates in a continuously peripheral sealing lip (54) which is in contact with the shaft (14).

11. A radial shaft-sealing ring according to any one of Claims 1 to 10, **characterized in that** the sealing lip (54, 154) is delimited in the axial direction by two conical surfaces intersecting one another.

12. A radial shaft-sealing ring according to any one of Claims 1 to 11, **characterized in that** the sealing element (24) consists of PTFE.

13. A radial shaft-sealing ring according to any one of Claims 1 to 12, **characterized in that** the sealing element (24) consists of a thermoplastic elastomeric material.

14. A radial shaft-sealing ring according to any one of Claims 1 to 13, **characterized in that** the corrugations (39) have a sinusoidal form.

15. A radial shaft-sealing ring according to any one of Claims 1 to 14, **characterized in that**, as seen in the circumferential direction, the corrugations (39) have a symmetrical form.

## Revendications

1. Joint à lèvre radiale pour l'étanchéification de liquides, comprenant une bague de renforcement (22) dans laquelle est fixé un élément d'étanchéité (24) en forme de rondelle fait d'une matière plastique rigide, qui est étiré à la manière d'une trompette, dans la zone de son diamètre intérieur, en direction de l'espace (18) à rendre étanche et se termine par une surface conique qui forme un premier angle avec l'axe de l'arbre, la surface conique limitant une arête d'étanchéité (50) périphérique continue qui est en contact avec l'arbre (14) à la manière d'une bande d'étanchéité (46) périphérique continue, et une gorge étant contiguë au côté de l'arête d'étanchéité (50) tourné vers l'air extérieur (20), gorge sur le fond de laquelle est prévu un dispositif de refoulement pour le liquide de fuite, qui fait saillie radialement vers l'intérieur et a une action hydrodynamique, le dispositif de refoulement étant formé par des ondulations (39) qui s'étendent dans la direction circonférentielle, **caractérisé en ce que** les ondulations (39) s'étendant dans la direction circonférentielle ont un profil interne qui se rétrécit en forme de coin dans la direction de l'espace (18) à rendre étanche, et en ce que le profil forme avec l'axe de l'arbre un deuxième angle qui est inférieur au premier angle.

2. Joint à lèvre radiale selon la revendication 1, **caractérisé en ce que** la gorge est formée par un creusement de l'élément d'étanchéité en forme de rondelle.

3. Joint à lèvre radiale selon l'une des revendications 1 à 2, **caractérisé en ce que** la gorge est limitée, au niveau de l'extrémité éloignée de l'arête d'étanchéité (50), par une surface en forme de couronne qui est associée à l'axe de l'arbre de manière essentiellement perpendiculaire pendant l'utilisation conforme aux prescriptions.

4. Joint à lèvre radiale selon l'une des revendications 1 à 3, **caractérisé en ce que** le deuxième angle, considéré dans la direction circonférentielle, augmente d'abord jusqu'au sommet de chaque ondulation, avant de diminuer à nouveau ensuite.

5. Joint à lèvre radiale selon l'une des revendications 1 à 4, **caractérisé en ce que** le fond de la gorge a un profil qui forme un troisième angle avec l'axe de l'arbre et en ce que le troisième angle et le deuxième angle sont identiques.

6. Joint à lèvre radiale selon l'une des revendications 1 à 5, **caractérisé en ce que** l'élément d'étanchéité (24) est pourvu, dans la zone contiguë à la gorge, d'au moins une fente (56) entourant l'arbre (14) de manière concentrique.

7. Joint à lèvre radiale selon la revendication 6, **caractérisé en ce que** la fente (56) ou chaque fente (56) à un profil en forme de V.

8. Joint à lèvre radiale selon l'une des revendications 6 à 7, **caractérisé en ce que** plusieurs fentes (56) sont prévues à distance égale les unes des autres.

9. Joint à lèvre radiale selon l'une dés revendications 1 à 8, **caractérisé en ce que** l'élément d'étanchéité (24) est relié de manière permanente, dans au moins une zone partielle sur le côté tourné vers l'espace (18) à rendre étanche, avec un revêtement (52) en matière élastomère.

10. Joint à lèvre radiale selon l'une des revendications 1 à 9, **caractérisé en ce que** le revêtement (52) se termine sous la forme d'une lèvre d'étanchéité (54) périphérique continue qui est en contact avec l'arbre (14).

11. Joint à lèvre radiale selon l'une des revendications 1 à 10, **caractérisé en ce que** la lèvre d'étanchéité (54, 154) est limitée, dans la direction axiale, par deux surfaces coniques qui se coupent.

12. Joint à lèvre radiale selon l'une des revendications 1 à 11, **caractérisé en ce que** l'élément d'étanchéité (24) est en PTFE.

13. Joint à lèvre radiale selon l'une des revendications 1 à 12, **caractérisé en ce que** l'élément d'étanchéité (24) est fait d'une matière élastomère thermoplastique.

14. Joint à lèvre radiale selon l'une des revendications 1 à 13, **caractérisé en ce que** les ondulations (39) ont une forme sinusoïdale.

15. Joint à lèvre radiale selon l'une des revendications 1 à 14, **caractérisé en ce que** les ondulations (39), considérées dans la direction circonférentielle, sont exécutées de manière à être symétriques.
